# EUROPEAN PATENT APPLICATION

(11) **EP 4 804 132 A1**
(43) Date of publication of application: **09.09.2026**
(21) Application number: 24895716.9
(22) Date of filing: 02.08.2024
(51) Int. Cl.: G06T 15/00

(54) **IMAGE PROCESSOR, IMAGE RENDERING METHOD, AND ELECTRONIC DEVICE**

(30) Priority: 29.11.2023 CN 202311625360
(71) Applicant: Huawei Technologies Co., Ltd., Shenzhen, Guangdong 518129 (CN)
(72) Inventor: CAO, Jianyu, Shenzhen, Guangdong 518129 (CN); LI, Wei, Shenzhen, Guangdong 518129 (CN); LU, Renmiao, Shenzhen, Guangdong 518129 (CN)
(74) Representative: Goddar, Heinz J.
(86) International application number: PCT/CN2024/109581
(87) International publication number: WO 2025/112613

(57) **Abstract**

Embodiments of this application provide an image processor, an image rendering method, and an electronic device, applied to the field of image processing technologies. The image processor includes: an obtaining module, configured to obtain a plurality of primitives; a first rendering module, configured to perform first rendering processing on the plurality of primitives, where the first rendering processing includes: determining visibility information of the plurality of primitives based on depth information of the plurality of primitives, and updating the visibility information based on a discard instruction in a rendering task, where the visibility information indicates at least one of the following: at least one visible primitive in the plurality of primitives or a visible pixel of the at least one visible primitive; and a second rendering module, configured to perform second rendering processing on the at least one visible primitive based on the visibility information to obtain a first image. In embodiments of this application, an invisible primitive and/or an invisible pixel are/is identified and culled by using the foregoing operations, thereby reducing processing load and power consumption of image rendering and improving image processing precision.

## Description

This application claims priority to Chinese Patent Application No. 202311625360.6, filed with the China National Intellectual Property Administration on November 29, 2023 and entitled "IMAGE PROCESSOR, IMAGE RENDERING METHOD, AND ELECTRONIC DEVICE", which is incorporated herein by reference in its entirety.

### TECHNICAL FIELD

This application relates to the field of image rendering technologies, and in particular, to an image processor, an image rendering method, and an electronic device.

### BACKGROUND

An electronic device may include an image processor. The image processor executes an image task, and generates, through rendering, an obtained image that needs to be displayed. Image rendering is an image processing process in which a three-dimensional image is presented on a two-dimensional plane. In this image processing process, different imaging parts of the three-dimensional image are expressed in a form of a plurality of primitives, and primitive drawing processing and primitive shading processing are performed on the plurality of primitives in a pipelined manner to obtain the final image on the two-dimensional imaging plane. However, the plurality of primitives have a three-dimensional characteristic. Therefore, in the finally obtained image, invisible primitives that are occluded and cannot be visually displayed inevitably exist. These invisible primitives are useless primitives for the obtained image. Performing primitive drawing processing and primitive shading processing on the invisible primitives greatly increases processing load of image rendering performed by a chip system, thereby increasing a latency and power consumption of image rendering.

To reduce the processing load for the invisible primitives, in a conventional image rendering technology, it is proposed that in the process of performing primitive drawing processing and primitive shading processing on the plurality of primitives in the pipelined manner, a depth test is performed on a drawn primitive after each time of primitive drawing processing, to obtain depth information, and the depth information indicates an occlusion relationship between the plurality of primitives. In a process of performing primitive drawing processing on each subsequent primitive, the occluded primitives are culled based on the depth information, to reduce processing load caused by the culled primitives. However, realization of this implementation depends on a drawing order of the plurality of primitives in the rendering task. If an occluded primitive is drawn before a primitive that occludes the occluded primitive, related processing load of the occluded primitive cannot be avoided according to the method. In addition, an occlusion relationship does not necessarily mean that the occluded primitive is an invisible primitive. Therefore, the conventional technology fails to effectively identify and cull the invisible primitives, and may reduce image processing precision.

### SUMMARY

Embodiments of this application provide an image processor, an image rendering method, and an electronic device, to effectively identify and cull an invisible primitive and/or an invisible pixel, thereby reducing processing load and power consumption of image rendering and improving image processing precision.

To achieve the foregoing objectives, the following technical solutions are used in embodiments of this application.

According to a first aspect, an image processor is provided. The image processor includes: an obtaining module, configured to obtain a plurality of primitives; a first rendering module, configured to perform first rendering processing on the plurality of primitives, where the first rendering processing includes: determining visibility information of the plurality of primitives based on depth information of the plurality of primitives, and updating the visibility information based on a discard instruction in a rendering task, where the visibility information indicates at least one of the following: at least one visible primitive in the plurality of primitives or a visible pixel of the at least one visible primitive; and a second rendering module, configured to perform second rendering processing on the at least one visible primitive based on the visibility information to obtain a first image.

First, in a conventional processing procedure of image rendering, primitive drawing processing, depth testing, and rendering are sequentially performed on the plurality of primitives in a pipelined manner. Therefore, the conventional depth test is related to a processing order of the plurality of primitives in the process of rendering the plurality of primitives in the pipelined manner. In this processing manner, an occlusion relationship obtained by the depth test also depends on a drawing order of the plurality of primitives. However, in this embodiment of this application, the rendering is divided into two phases: the first rendering processing and the second rendering processing. The first rendering processing is pre-rendering, and the second rendering processing is rendering that is actually used to generate the first image. In the first rendering processing, the visibility information of the plurality of primitives is determined based on the depth information, that is, before actual rendering of the second rendering processing is performed, the depth test is performed on the plurality of primitives based on a result of global drawing. The visibility information obtained by the depth test depends on the depth information derived from a combined result of the plurality of primitives. Because the combined result of the plurality of primitives represents an outcome obtained after the primitives are drawn, the depth information is accurate information obtained based on an occlusion relationship in a global drawing order, rather than depth information that is obtained based on processing in a pipelined manner without considering a drawing order in the conventional processing procedure of image rendering.

Second, the depth test is a process in which the visible information is derived from the occlusion relationship, but the occlusion relationship does not completely represent visibility of a primitive. In actual image rendering, a primitive that is occluded but still visible (for example, a primitive that is occluded by a translucent primitive) exists. In conventional image rendering, the visibility information obtained based on the depth test cannot fully represent true visibility of the primitive. In a shading processing stage of image rendering, the discard instruction is executed based on rendering processing during primitive shading, and an invisible pixel is culled based on the discard instruction and information such as a color parameter in the shading stage. Therefore, in this embodiment of this application, the discard instruction may be further executed in the first rendering processing stage, a primitive pixel that is occluded but may still be shaded for display is determined based on a running result of the discard instruction, and the visibility information obtained in the depth test stage of the first rendering processing is updated based on the running result. The updated visibility information includes precise visible primitives and visible pixels related to the rendering task. The at least one visible primitive in the plurality of primitives and/or the visible pixel of the at least one visible primitive may be determined based on the visibility information.

Third, after the accurate visibility information is obtained in the first rendering processing stage, the second rendering processing is performed based on the second rendering module, and in the second rendering processing, rendering needs to be performed on only the at least one visible primitive based on the visibility information, to obtain the first image. In the foregoing manner, the first rendering processing is equivalent to pre-rendering, and mainly relates to related processing of the depth information and the discard instruction, where processing load generated by running a related program related to the depth information and the discard instruction is small. However, in the second rendering processing, processing on invisible primitives and invisible pixels can be avoided based on the visibility information, thereby greatly reducing processing load of image rendering, avoiding erroneous processing on visible pixels, and improving image processing precision.

In a possible implementation, the first rendering processing further includes: performing a first depth test on pixels of the plurality of primitives to obtain the depth information. In this embodiment of this application, the first depth test may be performed on the pixels of the plurality of primitives to obtain depth information of each pixel. The visibility information of the plurality of primitives is determined based on the depth information of the plurality of primitives.

In a possible implementation, before performing the first depth test, the first rendering processing further includes: performing rasterization processing on the plurality of primitives. In this embodiment of this application, the rasterization processing is first performed on the plurality of primitives, and pixel points on an imaging plane that are unrelated to primitive imaging are culled through the rasterization processing, to obtain retained pixel points. The pixel points that are retained after the rasterization processing are pixel points used to display primitive pixels, and each retained pixel point may be related to one or more primitive pixels. Then, the first depth test is performed on the retained pixel points. Depth information of each retained pixel point may be determined based on the first depth test. The depth information may indicate a topmost primitive pixel at a corresponding pixel point.

In a possible implementation, updating the visibility information based on the discard instruction in the rendering task includes: culling an invisible pixel of one or more of the plurality of primitives based on the discard instruction to obtain remaining pixels of at least one primitive; performing a second depth test on the remaining pixels to obtain updated depth information; and updating the visibility information based on the updated depth information. In this embodiment of this application, the discard instruction is set in a pixel rendering program of the rendering task, and the discard instruction is used to cull, in the shading processing stage of image rendering, primitive pixels that do not need to be shaded. The discard instruction may come from an application. These primitive pixels that do not need to be shaded are invisible pixels. Therefore, the invisible pixel of one or more of the plurality of primitives continues to be culled based on the discard instruction to obtain the remaining pixels of the at least one primitive, and the remaining pixels are visible pixels related to the shading processing stage. Because some visible pixels that need to be shaded are not necessarily topmost primitive pixels that are on the imaging plane and that are at corresponding pixel points, these non-topmost to-be-shaded pixels are visible pixels that are ignored during the first depth test. The second depth test is performed on the remaining pixels, so that identification of these non-topmost to-be-shaded pixels can be implemented. The updated depth information is obtained based on the second depth test. The visibility information is updated based on the updated depth information, so that the updated visibility information includes a visible primitive and/or a visible pixel related to a processing procedure of the rendering task.

In a possible implementation, performing the second rendering processing on the at least one visible primitive based on the visibility information includes: obtaining the at least one visible primitive from the plurality of primitives based on the visibility information; and performing the second rendering processing on the at least one visible primitive. In this embodiment of this application, when performing the second rendering processing, the second rendering module may effectively determine which primitives in the plurality of primitives are visible primitives based on the updated visibility information. The at least one visible primitive is obtained from the plurality of primitives based on the visibility information. This may avoid processing on invisible primitives, thereby minimizing processing load of rendering.

In a possible implementation, the second rendering processing includes: obtaining a visible pixel of the at least one visible primitive based on the visibility information; and performing shading processing on the visible pixel of the at least one visible primitive. In this embodiment of this application, when performing the second rendering processing, the second rendering module may effectively determine the visible pixel in the visible primitive based on the updated visibility information. The visible pixel is obtained from the at least one visible primitive based on the visibility information. This may avoid processing on the invisible primitives, thereby minimizing processing load of rendering.

In a possible implementation, before the shading processing, the second rendering processing further includes: primitive drawing processing and rasterization processing. In this embodiment of this application, in a primitive drawing processing stage of the second rendering processing, the at least one visible primitive may be obtained from the plurality of primitives based on the visibility information, the primitive drawing is performed on the at least one visible primitive, and the rasterization processing is performed after the primitive drawing processing. Pixel points on the imaging plane that are unrelated to a primitive are culled through the rasterization processing. In the shading processing stage after the rasterization processing, the visible pixel may be obtained from the at least one visible primitive based on the visibility information, and a shading processing operation is performed on the visible pixel. Processing load of invisible primitives and invisible pixels can be reduced through the foregoing operation.

For example, because the previous first rendering processing includes a visibility operation like the depth test, processing related to the depth test may not be performed in the second rendering processing stage.

In a possible implementation, in the second rendering processing, a processing order of the at least one visible primitive is different from an obtaining order of the plurality of primitives. In this embodiment of this application, because the visibility information has been obtained in the first rendering processing, the visibility information includes related information of visible primitives and/or visible pixels in all processing stages of the rendering task. Therefore, when rendering is performed on the at least one visible primitive in the second rendering processing stage, provided that to-be-rendered visible content is determined, rendering does not need to be performed completely based on the obtaining order of the primitives. The processing order of the at least one visible primitive may be adjusted based on an actual design requirement and an actual application requirement.

In a possible implementation, the image processor further includes a program generation module. The program generation module is configured to clip the rendering task to obtain a visibility-related clipped program. The first rendering module is further configured to perform the first rendering processing on the plurality of primitives by running the clipped program. In this embodiment of this application, the rendering task indicates to perform rendering on the plurality of primitives to obtain the first image. Therefore, in a rendering process, visible primitives and visible pixels are inevitably processed. The rendering task is clipped, to obtain the visibility-related clipped program in the rendering task. The clipped program has a small runtime footprint yet is capable of precisely obtaining visibility information in all processing stages of the rendering task. The first rendering module runs the clipped program to perform the first rendering processing, so that the visibility information can be obtained with small processing load.

In a possible implementation, the obtaining module is further configured to obtain a visibility-related clipped program from the rendering task. The first rendering module is further configured to perform the first rendering processing on the plurality of primitives by running the clipped program. In this embodiment of this application, in some cases, a clipped program related to the rendering task has been stored offline, and the image processor does not need to generate the clipped program through processing. In this case, the obtaining module may directly obtain the clipped program from the rendering task. Then, the first rendering module runs the clipped program to perform the first rendering processing, so that the visibility information can be obtained with small processing load.

According to a second aspect, an embodiment of this application further provides an image rendering method. The method includes: obtaining a plurality of primitives; performing first rendering processing on the plurality of primitives, where the first rendering processing includes: determining visibility information of the plurality of primitives based on depth information of the plurality of primitives, and updating the visibility information based on a discard instruction in a rendering task, where the visibility information indicates at least one of the following: at least one visible primitive in the plurality of primitives or a visible pixel of the at least one visible primitive; and performing second rendering processing on the at least one visible primitive based on the visibility information to obtain a first image.

In a possible implementation, the first rendering processing further includes: performing a first depth test on pixels of the plurality of primitives to obtain the depth information.

In a possible implementation, before performing the first depth test, the first rendering processing further includes: performing rasterization processing on the plurality of primitives.

In a possible implementation, updating the visibility information based on the discard instruction in the rendering task includes: culling an invisible pixel of one or more of the plurality of primitives based on the discard instruction to obtain remaining pixels of at least one primitive; performing a second depth test on the remaining pixels to obtain updated depth information; and updating the visibility information based on the updated depth information.

In a possible implementation, performing the second rendering processing on the at least one visible primitive based on the visibility information includes: obtaining the at least one visible primitive from the plurality of primitives based on the visibility information; and performing the second rendering processing on the at least one visible primitive.

In a possible implementation, the second rendering processing includes: obtaining a visible pixel of the at least one visible primitive based on the visibility information; and performing shading processing on the visible pixel of the at least one visible primitive.

In a possible implementation, before the shading processing, the second rendering processing further includes: primitive drawing processing and rasterization processing.

In a possible implementation, during the second rendering processing, a processing order of the at least one visible primitive is different from an obtaining order of the plurality of primitives.

In a possible implementation, the method further includes: clipping the rendering task to obtain a visibility-related clipped program; and performing the first rendering processing on the plurality of primitives by running the clipped program.

In a possible implementation, the method further includes: obtaining a visibility-related clipped program from the rendering task; and performing the first rendering processing on the plurality of primitives by running the clipped program.

According to a third aspect, an embodiment of this application further provides an image rendering apparatus. The image rendering apparatus includes an image processing circuit and a memory. The image processing circuit is coupled to the memory. The memory stores a rendering task for a first image, and the rendering task includes a discard instruction. The image processing circuit performs, based on the rendering task, the image rendering method according to the second aspect and any other manners.

According to a fourth aspect, an embodiment of this application further provides an electronic device. The electronic device includes a circuit board and the image processor described according to the first aspect. The image processor is disposed on the circuit board.

According to a fifth aspect, an embodiment of this application further provides a computer-readable storage medium. The computer-readable storage medium includes instructions. When the instructions are run on the image processor described according to the first aspect, the image processor is enabled to perform the image rendering method according to the second aspect and any other manners.

According to a sixth aspect, an embodiment of this application further provides a computer program product. When the computer program product is run on a computer, the computer is enabled to perform the image rendering method according to the second aspect and any other manners.

For technical principles and beneficial effects of embodiments of the second aspect, the third aspect, the fourth aspect, the fifth aspect, and the sixth aspect, refer to related descriptions of the first aspect. Details are not described herein again.

### BRIEF DESCRIPTION OF DRAWINGS

FIG. 1 is a diagram of rendering a primitive in a visual coordinate system;
FIG. 2 is a diagram of an electronic device according to an embodiment of this application;
FIG. 3 is a diagram of a chip system according to an embodiment of this application;
FIG. 4 is a diagram of a first image processor according to an embodiment of this application;
FIG. 5 is a diagram of a second image processor according to an embodiment of this application;
FIG. 6A and FIG. 6B are diagrams of different drawing orders of primitives that are in an occlusion relationship according to an embodiment of this application;
FIG. 7 is a diagram of another second image processor according to an embodiment of this application;
FIG. 8 is a diagram 1 of a third image processor according to an embodiment of this application;
FIG. 9 is a diagram 2 of another third image processor according to an embodiment of this application;
FIG. 10 is a diagram 3 of still another third image processor according to an embodiment of this application;
FIG. 11 is a diagram 4 of still another third image processor according to an embodiment of this application;
FIG. 12 is a flowchart 1 of an image rendering method according to an embodiment of this application;
FIG. 13A and FIG. 13B are diagrams of a running program for rendering according to an embodiment of this application;
FIG. 14 is a flowchart 2 of another image rendering method according to an embodiment of this application;
FIG. 15 is a flowchart 3 of still another image rendering method according to an embodiment of this application;
FIG. 16 is a diagram of generating visibility information in a first rendering processing stage according to an embodiment of this application;
FIG. 17 is a flowchart 4 of still another image rendering method according to an embodiment of this application;
FIG. 18A and FIG. 18B are diagrams of rendering pixels of a plurality of primitives in a same pixel block according to an embodiment of this application;
FIG. 19A and FIG. 19B are diagrams of culling an invisible pixel based on visibility information according to an embodiment of this application;
FIG. 20 is a flowchart 5 of still another image rendering method according to an embodiment of this application; and
FIG. 21 is a diagram of performing rendering on a visible pixel in a second rendering processing stage according to an embodiment of this application.

### DESCRIPTION OF EMBODIMENTS

It should be noted that terms such as "first" and "second" in embodiments of this application are merely used to distinguish between features of a same type, and cannot be understood as an indication of relative importance, a quantity, a sequence, or the like.

The term "example", "for example", or the like in embodiments of this application is used to represent giving an example, an illustration, or a description. Any embodiment or design scheme described as an "example" or "for example" in this application should not be explained as being more preferred or having more advantages than another embodiment or design scheme. To be precise, use of the term "example", "for example", or the like is intended to present a related concept in a specific manner.

Terms such as "coupling" and "connection" in embodiments of this application should be understood in a broad sense. For example, the terms may mean a direct physical connection or an indirect connection implemented through an electronic component, for example, a connection implemented through a metal line, a resistor, an inductor, a capacitor, or another electronic component.

First, some basic concepts in embodiments of this application are explained and described.

A primitive (primitive) is a basic input unit for image rendering. Generally, primitives may include points (points), lines (lines), polygons (triangles), and the like. Polygon primitives are most commonly triangle primitives.

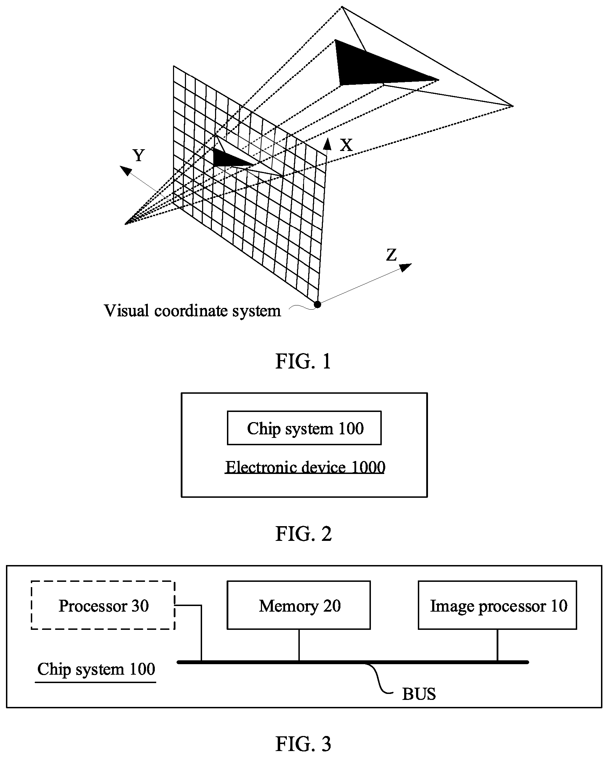

Image rendering means that an image processor performs image rendering on a plurality of input primitives based on a rendering task. Image rendering may include primitive drawing processing, rasterization processing, shading processing, and the like. As shown in FIG. 1, the primitive drawing processing is a process of drawing a polygon primitive at a destination imaging position through matrix calculation based on processing such as rotation, translation, and scaling, that is, drawing the polygon primitive based on a specific position, angle, and size in a visual coordinate system. The rasterization processing is a process of traversing pixel points in a view frustum range of the visual coordinate system. If the pixel point is covered by a polygon primitive, the pixel point is retained, or if the pixel point is not covered by a polygon primitive, the pixel point is discarded. The shading processing is a process of performing lighting calculation on pixel points retained after rasterization, to generate corresponding colors. In a shading processing stage, a discard instruction (discard) is executed to cull an invisible pixel portion based on color information of a plurality of primitives.

A depth test (z-test), as shown in FIG. 1, defines a coordinate reference system used in computer graphics as follows: an up-down direction and a left-right direction of a screen respectively serve as a y-axis and an x-axis, and a direction perpendicular to the screen serves as a z-axis. The plurality of primitives are representations of three-dimensional image information on a two-dimensional imaging plane. Therefore, different primitives have different positions on the z-axis. Therefore, z is also referred to as a depth of a primitive. The depth test is processing operations such as depth detection and comparison on a primitive.

An embodiment of this application provides an electronic device. As shown in FIG. 2, the electronic device 1000 includes a circuit board (not shown in the figure) and a chip system 100. The chip system 100 is disposed on the circuit board. As shown in FIG. 3, the chip system 100 includes an image processor 10 and a memory 20. The image processor 10 is coupled to the memory 20 through a bus (BUS). The memory 20 stores a rendering task related to a first image and a plurality of primitives related to the first image. The rendering task indicates the image processor 10 to obtain the plurality of primitives from the memory 20, and perform image rendering based on the plurality of primitives to obtain the first image. Rendering processing includes primitive drawing processing, rasterization processing, shading processing, and the like. The rendering task may include a discard instruction. The memory 20 may include various types of volatile memories or non-volatile memories. The image processor 10 may include, but is not limited to, a graphics processing unit (GPU).

For example, as shown in FIG. 3, the chip system 100 may further include a processor 30. The processor 30 is coupled to the memory 20 and the image processor 10 through the bus (BUS). The processor 30 is configured to write the rendering task into the memory 20. Optionally, the processor 30 can run an operating system program or an application. The processor may include, but is not limited to, a central processing unit (CPU), a microcontroller, and a microprocessor. The rendering task may be generated by the application.

For example, the electronic device 1000 may be a device having an image processing function or an image display function, like an image processing device, a desktop computer, a notebook computer, a tablet computer, a smartphone, a television, or a smart display.

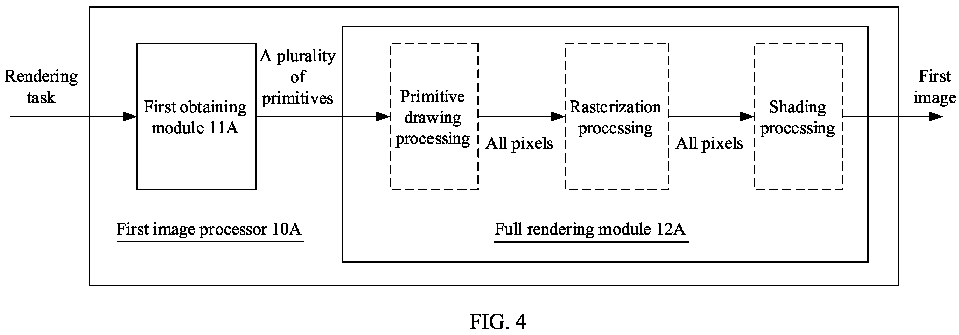

In some possible implementations, the image processor 10 described in FIG. 3 may be a first image processor that performs image rendering on the plurality of primitives based on the rendering task. As shown in FIG. 4, the first image processor 10A includes a first obtaining module 11A and a full rendering module 12A. The first obtaining module 11A is configured to obtain the plurality of primitives. The full rendering module 12A is configured to perform primitive drawing processing, rasterization processing, shading processing, and the like on each of the plurality of primitives in sequence in a pipelined manner based on an obtaining order of the plurality of primitives, to obtain the first image through rendering. However, because the plurality of primitives have a three-dimensional characteristic, each frame of the generated first image is a representation of a three-dimensional object on a two-dimensional plane. In the finally obtained first image, invisible primitive pixels that are occluded and cannot be visually displayed inevitably exist. These invisible primitive pixels are useless primitive pixels for the obtained image. In the first image processor 10A described in the embodiment shown in FIG. 4, when primitive drawing processing and shading rendering processing are sequentially performed on a plurality of pixels of the plurality of input primitives, excessive invisible pixels are processed, thereby greatly increasing processing load of image rendering, and further increasing a latency and power consumption of image rendering. In this case, the processing load and the power consumption are high. Under an image quality requirement, it is difficult to implement image rendering on the mobile electronic device 1000.

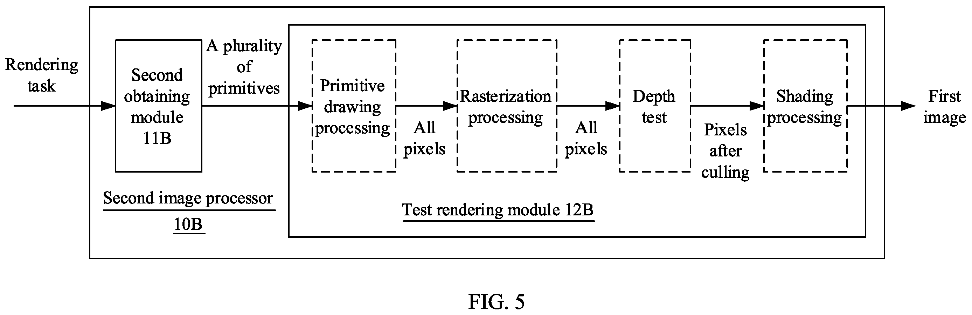

To reduce the processor, the power consumption, and the like that are caused by processing the invisible primitive pixels in the embodiment shown in FIG. 4, in some possible implementations, the image processor 10 shown in FIG. 3 may be a second image processor based on a depth test. As shown in FIG. 5, the second image processor 10B includes a second obtaining module 11B and a test rendering module 12B. The second obtaining module 11B is configured to obtain the plurality of primitives. The test rendering module 12B is configured to perform primitive drawing processing, rasterization processing, depth testing, and shading processing on each of the plurality of primitives in a pipelined manner based on an obtaining order of the plurality of primitives, to obtain the first image through rendering. Specifically, first, during the primitive drawing processing, whether a currently drawn primitive is an occluded primitive is determined based on existing depth information, to cull the occluded primitive pixel, and the primitive drawing processing is performed only on a non-occluded primitive pixel portion. The foregoing depth information indicates an occlusion relationship between the plurality of primitives. Second, during the rasterization processing, a pixel point that is not covered by a primitive pixel on the imaging plane is culled based on a drawn primitive pixel, to obtain a retained pixel point. Each retained pixel point may be related to one or more primitive pixels. Finally, during the depth test processing, after the rasterization processing, a primitive occlusion relationship under a current progress of the primitive drawing processing is determined, and the depth information is recorded and updated based on the currently determined primitive occlusion relationship, where updated depth information is used for performing primitive drawing processing on a subsequent primitive. In the embodiment shown in FIG. 5 of this application, in a primitive drawing processing stage, the occluded primitive pixels may be culled based on the existing depth information, to reduce drawing processing on the primitive pixels of this portion. In this case, processing on the occluded primitive pixel portion is also avoided during subsequent shading processing on the drawn pixel portion obtained through the primitive drawing processing. Therefore, according to the embodiment described in FIG. 5, processing load of useless redundant primitives can be reduced to some extent, thereby reducing power consumption of the chip system 100.

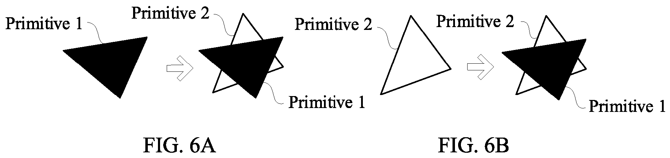

However, the implementation shown in FIG. 5 depends on an obtaining order and a drawing order of primitives. As shown in FIG. 6A and FIG. 6B, drawing of a primitive 1 (represented by a black triangle) and a primitive 2 (represented by a white triangle) is used as an example, where the primitive 2 is a primitive occluded by the primitive 1. In FIG. 6A, the primitive 1 is drawn before the primitive 2. In this case, the depth information after drawing is updated after the primitive drawing processing is performed on the primitive 1. Then, when the primitive drawing processing is performed on the primitive 2, it may be determined, based on updated depth information, that some primitive pixel portions of the primitive 2 are occluded by the primitive 1. Therefore, in a process of performing the primitive drawing processing on the primitive 2, the occluded primitive pixel portions of the primitive 2 may be culled based on the depth information. Under the primitive drawing order shown in FIG. 6A, the occluded primitive pixel portions of the primitive 2 can be normally culled based on the depth information. In FIG. 6B, the primitive 2 is drawn before the primitive 1. In this case, the existing depth information does not include information about the primitive 1. Therefore, when the primitive drawing processing is performed on the primitive 2, an occlusion relationship between the primitive 1 and the primitive 2 cannot be determined based on the existing depth information, and the entire primitive 2 needs to be drawn. After drawing of the primitive 2 is completed, the depth information is updated based on the primitive 2. Primitive drawing processing is performed on the primitive 1 only after primitive drawing processing and depth testing of the primitive 2 are completed. In a process of performing the primitive drawing processing on the primitive 1, it may be determined, based on the depth information, that the primitive 1 occludes the primitive 2. Therefore, the entire primitive 1 needs to be drawn. It may be learned from the foregoing analysis that, there are two problems in the embodiment shown in FIG. 5: Problem 1: Although the occluded primitive pixel portions can be culled based on the depth information according to the method, this manner is limited by a drawing order of the primitives, and cannot effectively cull the primitive under the drawing order. Problem 2: The occlusion relationship between the primitives is not exactly equivalent to visibility of the primitives. During image rendering, some occluded primitives may still be visible primitives. If a primitive pixel portion that is occluded but still visible is culled during the primitive drawing processing, processing precision of image rendering is reduced.

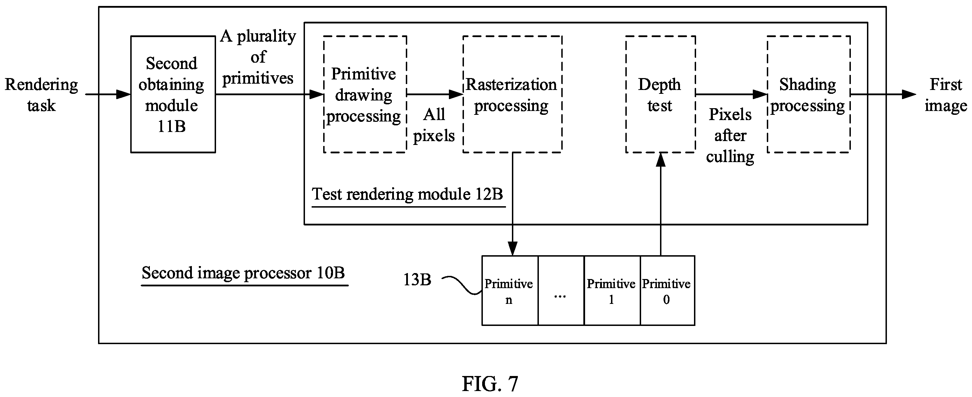

To improve primitive culling precision in the embodiment shown in FIG. 5, to cull more occluded primitive pixel portions, in some possible implementations, as shown in FIG. 7, the second image processor 10B may further include a delay buffer 13B. The delay buffer 13B buffers n primitives that have undergone the primitive drawing processing. When a new primitive completes primitive drawing processing and rasterization processing, one primitive is selected from the n primitives based on depth information for subsequent shading processing, and the like. After the new primitive is buffered in the delay buffer 13B, the depth information is updated based on the primitives stored in the delay buffer 13B. In this implementation, updated depth information may reflect an occlusion relationship between the n primitives in the delay buffer 13B, so that an occlusion relationship within a span of the n primitives may be determined without being limited by a primitive drawing order. However, in this implementation, the following problems still exist: Problem 1: n is related to a size of storage space of the delay buffer 13B. Therefore, a value of n is limited. If a span in drawing order between two primitives that have an occlusion relationship is greater than n, the occlusion relationship cannot be effectively identified according to the solution described in the embodiment shown in FIG. 7. Problem 2: In the solution of the embodiment shown in FIG. 7, primitives still need to undergo complete primitive drawing processing, to obtain depth information that represents an occlusion relationship. This also means that complete primitive drawing processing for invisible primitives cannot be avoided, and this portion of processing load remains unavoidable. Problem 3: The occlusion relationship between the primitives is not exactly equivalent to visibility of the primitives. During image rendering, some occluded primitives may still be visible primitives. If a primitive pixel portion that is occluded but still visible is culled during the primitive drawing processing, processing precision of image rendering is reduced.

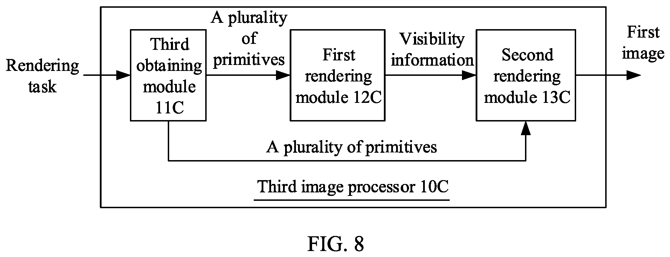

To further reduce the processing load and the power consumption of image rendering and improve image processing precision, in some possible implementations, the image processor 10 described in FIG. 3 may be a third image processor that obtains visibility information based on first rendering processing, namely, rendering preprocessing, and performs second rendering processing on a visible primitive based on the visibility information. In this solution, rather than performing rendering only once as in FIG. 4, FIG. 5, or FIG. 7, two processes, namely, rendering preprocessing and rendering processing, may be performed. As shown in FIG. 8, the third image processor 10C includes a third obtaining module 11C, configured to obtain the plurality of primitives; a first rendering module 12C, configured to perform first rendering processing on the plurality of primitives, which is similar to rendering preprocessing, where the first rendering processing includes: determining visibility information of the plurality of primitives based on depth information of the plurality of primitives, and updating the visibility information based on the discard instruction in the rendering task, where the visibility information indicates at least one of the following: at least one visible primitive in the plurality of primitives or a visible pixel of the at least one visible primitive; and a second rendering module 13C, configured to perform second rendering processing on the at least one visible primitive based on the visibility information to obtain the first image, where the second rendering processing is used to generate the first image.

For example, in the first rendering processing performed by the first rendering module 12C, an operation of determining the visibility information of the plurality of primitives based on the depth information of the plurality of primitives may be an operation related to pixel culling based on the depth information during primitive drawing processing. In this embodiment of this application, during conventional complete primitive drawing processing, an occlusion relationship between a currently drawn primitive and a previously drawn primitive is determined based on depth information, and visibility information of the primitive is determined based on the occlusion relationship. Then, pixel culling is performed on a determined invisible primitive in a primitive drawing processing stage based on the visibility information. Therefore, an operation of culling invisible primitive pixels in the primitive drawing processing may be performed in the first rendering processing. The operation occupies only a small portion of processing load of the complete primitive drawing processing, but it is sufficient to obtain accurate visibility information for the primitive drawing processing stage based on the small operation.

For example, in the first rendering processing performed by the first rendering module 12C, an operation of updating the visibility information based on the discard instruction in the rendering task may be an operation related to pixel culling performed based on the discard instruction during conventional shading processing. In this embodiment of this application, in a complete process of image rendering, shading processing accounts for the majority of the processing load. However, there is color-related visibility information in the shading processing. Therefore, how to obtain the color-related visibility information has been a major challenge in image rendering. However, in actual application, an invisible pixel portion needs to be culled based on the discard instruction in the rendering task during the shading processing. After the discard instruction is executed, primitive pixels that do not need to be shaded are culled based on a color parameter and the like of a primitive, and the primitive pixels that do not need to be shaded are an invisible pixel portion of the primitive. Program execution overheads of the discard instruction are small, but the discard instruction is related to pixel color display of a processed primitive in a shading processing stage. Therefore, visibility information about a color and the like can be obtained in a process of executing the discard instruction. The execution of the discard instruction accounts for only a small portion of the complete shading processing. Therefore, in the embodiment shown in FIG. 8 of this application, only content related to the discard instruction in a complete process of shading processing needs to performed in the first rendering processing, to obtain accurate visibility information for the shading processing stage with small processing load.

A conventional image rendering process includes sequentially performing primitive drawing processing, rasterization processing, shading processing, and the like on each of the plurality of primitives in a pipelined manner. During image rendering processing, visibility of a primitive is reflected based on the following two aspects: Aspect 1: Whether the primitive is occluded by another primitive. Aspect 2: Whether the primitive needs to be shaded (that is, whether the primitive is occluded by a transparent or translucent primitive). However, the foregoing embodiments shown in FIG. 5 and FIG. 7 relate only to obtaining visibility information based on an occlusion relationship from depth information. That is, the embodiments shown in FIG. 5 and FIG. 7 focus only on visibility in the aspect 1, but do not focus on visibility in the aspect 2, and cannot effectively implement culling of invisible primitives. In addition, in the embodiments shown in FIG. 5 and FIG. 7, a depth test is a step in an actual process of image rendering processing. That is, when the plurality of primitives are processed in a pipelined manner, the depth test is sequentially performed on each primitive. Therefore, in the embodiment shown in FIG. 5, an occlusion relationship obtained by each time of depth testing depends on a drawing order of the primitives. In the embodiment shown in FIG. 7, in a range of the storage space size n of the delay buffer 13B, an occlusion relationship obtained by the depth test does not depend on a drawing order of the primitives. However, for two primitives with a span in primitive drawing order being greater than n, a result of the depth test still needs to depend on the drawing order of the primitives. However, in this embodiment of this application, the image rendering operation is divided into two rendering stages, which specifically includes: first rendering processing serving as rendering preprocessing, and second rendering processing for actually performing image rendering to generate the first image. In the first rendering processing serving as rendering preprocessing, processing that is merely related to depth information is performed on the plurality of primitives to obtain visibility information for an occlusion relationship between the plurality of primitives. That is, the depth information is set before the actual image rendering processing of the second rendering processing is performed, the processing that is related to depth information is performed on the plurality of primitives, to obtain the depth information of the plurality of primitives. The depth information is a result obtained after the depth test is separately performed on the plurality of primitives, and all the primitives are considered in the depth information. Therefore, the depth information obtained in the first rendering processing stage indicates an accurate occlusion relationship between the plurality of primitives, which does not depend on a drawing order of the primitives. Compared with the embodiments shown in FIG. 5 and FIG. 7, the depth information obtained by the first rendering processing is more accurate. In addition, the depth information may only be used to obtain visibility information about an occlusion relationship. However, the occlusion relationship does not completely represent visibility of a primitive. In actual image rendering, a primitive that is occluded but still visible (for example, a primitive that is occluded by a translucent primitive) exists. In conventional image rendering, the visibility information obtained based on the depth test cannot fully represent true visibility of the primitive, which ignores color-related visibility information during shading processing. However, in the shading processing stage of image rendering, the discard instruction is executed based on rendering processing during primitive shading, and an invisible pixel is culled based on the discard instruction and information such as a color parameter in the shading stage. Therefore, in the first rendering processing stage, visibility information for shading in the shading stage may be further obtained based on the discard instruction, and the visibility information obtained based on the depth information is updated based on the visibility information for shading. Based on the foregoing operation, which primitives in the plurality of primitives are visible primitives and which pixel portions of each visible primitive are visible pixels can be accurately and effectively determined based on the visibility information obtained in the first rendering processing stage. Then, the second rendering processing (namely, the actual image rendering) only needs to be performed on the at least one visible primitive based on the visibility information to obtain the first image. In embodiments of this application, processing for a determined visible portion can be implemented in the primitive drawing processing stage and the shading processing stage, thereby more accurately and effectively avoiding rendering on an invisible portion, greatly reducing the processing load and the power consumption of image rendering without lowering the processing precision of image rendering.

In some possible implementations, the visibility information may include pixel visibility information and/or primitive visibility information. The primitive visibility information indicates at least one visible primitive in the plurality of primitives. The pixel visibility information indicates a visible pixel of the at least one visible primitive.

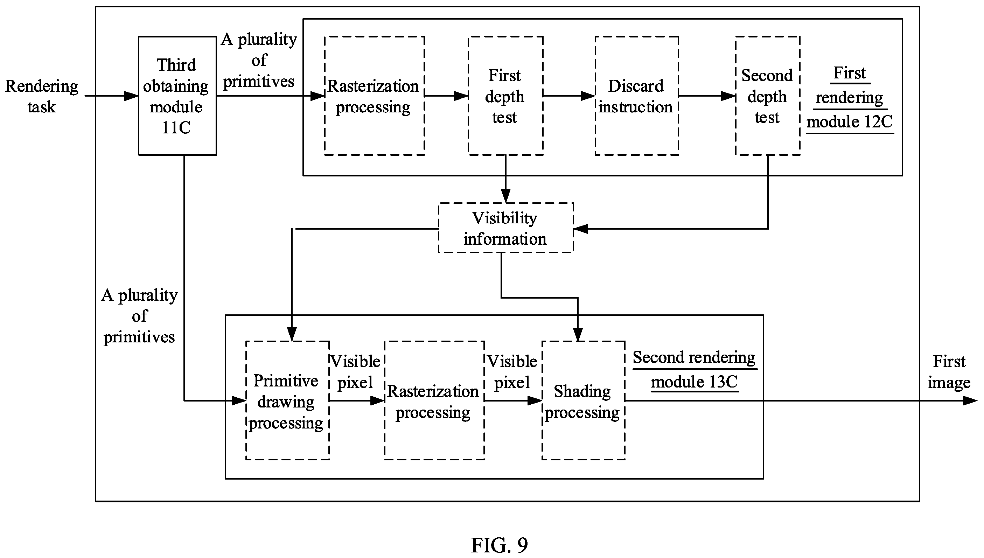

In some possible implementations, as shown in FIG. 9, the first rendering processing includes rasterization processing and a first depth test that are sequentially performed. In this embodiment of this application, performing the rasterization processing in the first rendering processing may cull pixel points on an imaging plane that are unrelated to primitive pixels. The first depth test is performed on retained pixel points, to obtain depth information of the plurality of primitives on the retained pixel points. For technical principles and technical effects of the rasterization processing, the first depth test, and the depth information, refer to related descriptions of the rasterization processing, the depth test, and the depth information in the foregoing embodiments. Details are not described herein again.

In some possible implementations, as shown in FIG. 9, updating the visibility information based on the discard instruction in the rendering task described in the embodiment shown in FIG. 8 includes: culling an invisible pixel of one or more of the plurality of primitives based on the discard instruction to obtain remaining pixels of at least one primitive; performing a second depth test on the remaining pixels to obtain updated depth information; and updating the visibility information based on the updated depth information. For example, the rendering task may be generated by the processor 30 in the embodiment shown in FIG. 3, for example, generated by the processor 30 by executing an application. The processor 30 sets, in the generated rendering task, an execution function for the discard instruction. Therefore, the discard instruction may be obtained by the processor 30 by executing the application.

In some possible implementations, performing the second rendering processing on the at least one visible primitive based on the visibility information includes: obtaining the at least one visible primitive from the plurality of primitives based on the visibility information; and performing the second rendering processing on the at least one visible primitive.

In some examples, the second rendering processing includes: obtaining a visible pixel of the at least one visible primitive based on the visibility information; and performing shading processing, namely, pixel rendering processing, on the visible pixel of the at least one visible primitive.

For example, as shown in FIG. 9, the second rendering processing includes primitive drawing processing, rasterization processing, and shading processing. In this embodiment of this application, the second rendering module 13C obtains the plurality of primitives and the visibility information. The at least one visible primitive is obtained from the plurality of primitives based on the visibility information. That is, the second rendering processing, such as primitive drawing, is performed on the at least one visible primitive based on the primitive visibility information in the visibility information, and rasterization processing and shading processing are subsequently performed based on this. Specifically, performing the shading processing on each visible primitive includes: obtaining the visible pixel of the at least one visible primitive based on the pixel visibility information in the visibility information, and performing pixel shading rendering on the visible pixel. In this implementation, during the primitive drawing processing in the second rendering processing, only a visible pixel portion on the visible primitive needs to be drawn, and rasterization processing and shading processing are performed based on the drawn visible pixel portion. The second rendering processing may be performed on a visible primitive in a targeted manner, and such execution is performed at a pixel-level granularity. Therefore, the second rendering processing can effectively avoid rendering processing for an invisible primitive pixel portion in an entire rendering process, thereby greatly reducing the processing load of image rendering.

In some possible implementations, the first rendering module 12C may store the visibility information in different manners.

In some examples, the first rendering module 12C stores the generated visibility information in the memory 20. The second rendering module 13C obtains the visibility information from the memory 20.

In some examples, the first rendering module 12C stores the generated visibility information in a buffer circuit inside the image processor 10. For example, the buffer circuit may be a buffer or a register.

For example, the buffer circuit includes a first buffer circuit and a second buffer circuit, and the first buffer circuit is configured to store the primitive visibility information. The second buffer circuit is configured to store the pixel visibility information.

For example, the second buffer circuit may include a plurality of buffers, and the plurality of buffers are configured to store pixel visibility information that is incompatible with each other. For example, when a plurality of visible primitives exist on a same pixel block, the plurality of visible primitives on the same pixel block may have corresponding pixel visibility information, and incompatibility may exist between the pixel visibility information. In this case, different buffers in the plurality of buffers may be used to store the incompatible pixel visibility information.

For example, the plurality of buffers of the second buffer circuit may include a depth buffer, and the depth buffer is a buffer configured to store depth information.

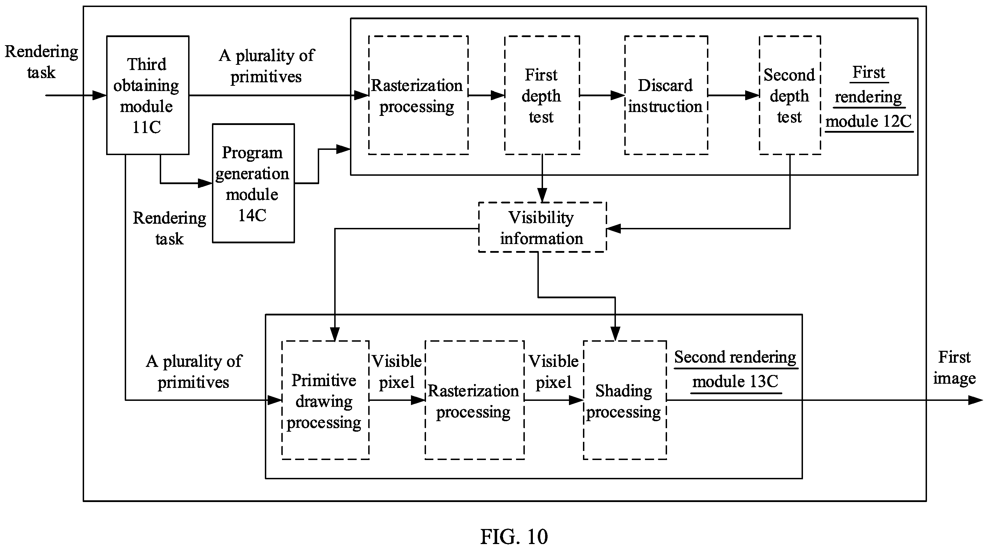

In some possible implementations, as shown in FIG. 10, the third image processor 10C further includes a program generation module 14C, configured to clip the rendering task to obtain a visibility-related clipped program. The first rendering module 12C is configured to perform the first rendering processing on the plurality of primitives by running the clipped program. In this embodiment of this application, an objective of the first rendering processing is to determine visibility information related to the plurality of primitives in the rendering task, so that the second rendering processing may perform image rendering with minimum processing load based on the accurately determined visibility information. Therefore, the third image processor 10C may clip the rendering task, to cull a visibility-independent program portion from the rendering task, thereby obtaining the visibility-related clipped program. Processing load of the clipped program is small, and the first rendering module 12C may implement execution of the first rendering processing by running the clipped program with extremely small processing load overheads, to obtain the visibility information.

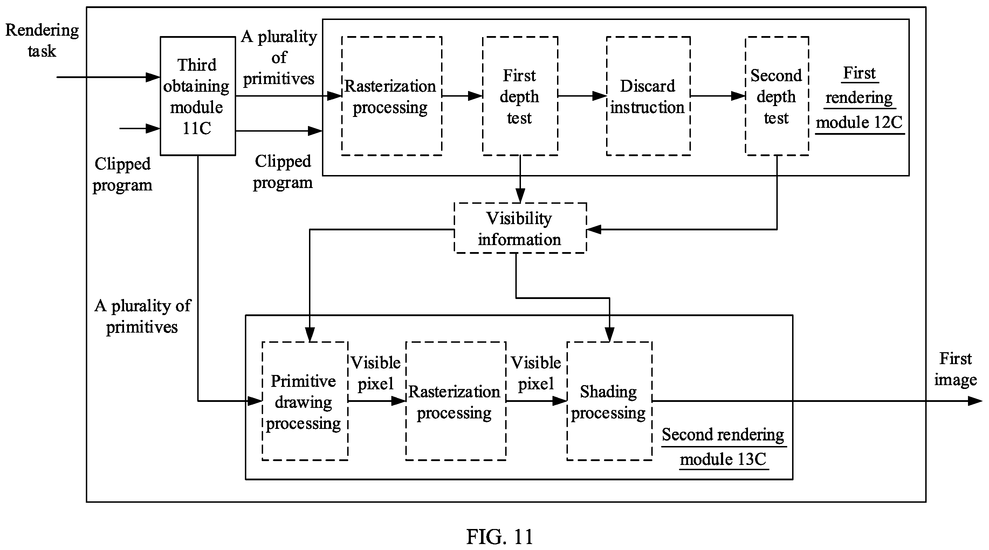

In some possible implementations, as shown in FIG. 11, the third obtaining module 11C is further configured to obtain the visibility-related clipped program from the rendering task. The first rendering module 12C is configured to perform the first rendering processing on the plurality of primitives by directly running the clipped program. In this embodiment of this application, the clipped program may be preset in the rendering task, or may be obtained by the third image processor 10C through clipping in advance based on the embodiment shown in FIG. 10 when the third image processor 10C previously processes the rendering task. In this case, the third image processor 10C may obtain the existing clipped program based on the rendering task, and the first rendering module 12C runs the clipped program to obtain the visibility information.

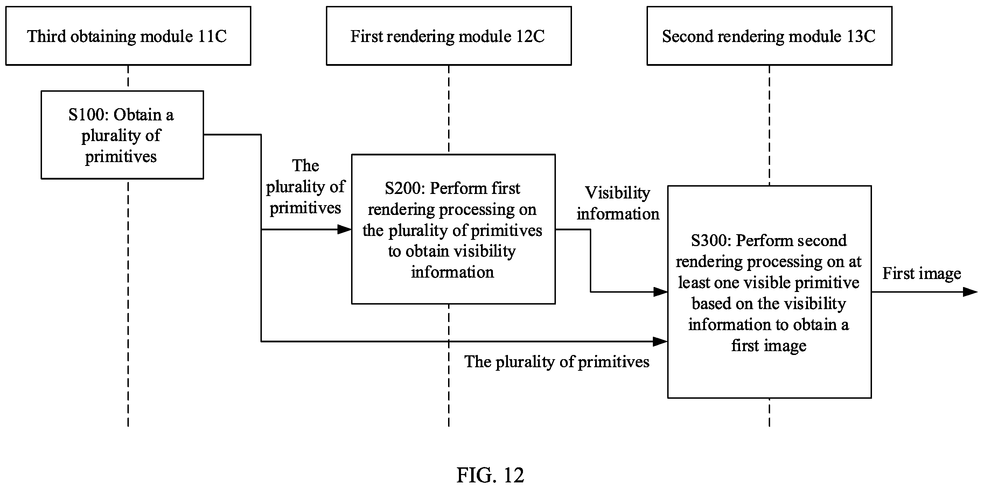

Based on the third image processor 10C shown in FIG. 8, FIG. 9, FIG. 10, and FIG. 11, the following image rendering method including step S100 to step S300 shown in FIG. 12 may be performed.

S100: Obtain a plurality of primitives.

In some possible implementations, as shown in FIG. 8, FIG. 9, FIG. 10, and FIG. 11, the processor 30 of the chip system 100 writes a rendering task and the plurality of primitives into the memory 20. The rendering task indicates to perform image rendering on the plurality of primitives to generate a first image. The third obtaining module 11CC of the third image processor 10C obtains the rendering task from the memory 20, and obtains the plurality of primitives based on the rendering task.

In some possible implementations, step S100 further includes: when the plurality of primitives are obtained, further obtaining, based on the rendering task, a visibility-related clipped program. In some examples, as shown in FIG. 10, the rendering task is clipped based on the program generation module 14C of the third image processor 10C to obtain the visibility-related clipped program. In some examples, as shown in FIG. 11, the third obtaining module 11C of the third image processor 10C obtains, based on the rendering task, the visibility-related clipped program.

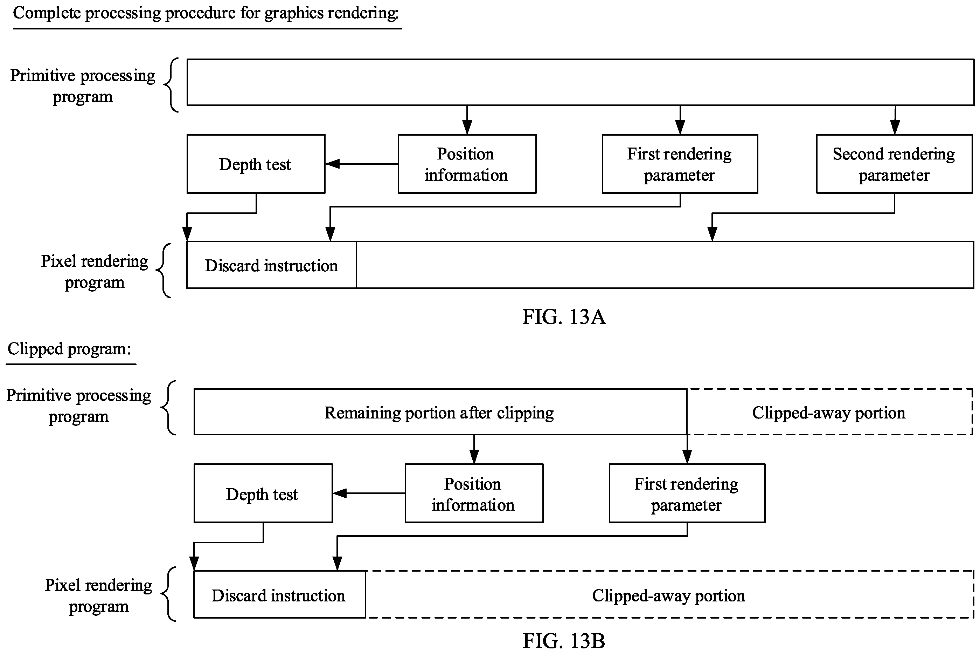

In some examples, a running program of the rendering task may be clipped, and a running program that remains after clipping serves as the clipped program. For example, FIG. 13A is a diagram of a running program included in the rendering task obtained by the image processor 10. The running program described in FIG. 13A includes a program for performing all operations such as primitive drawing processing, depth testing, rasterization processing, and shading processing. The primitive drawing processing and the like may be performed based on a primitive processing program (vertex shader). The shading processing is performed based on a pixel rendering program (fragment shader). In a process of executing the primitive processing program, depth-related position (position) information, a first rendering parameter, and a second rendering parameter of a primitive are obtained, where the first rendering parameter is a visibility-related rendering parameter (for example, information such as a color), and the second rendering parameter is a visibility-independent rendering parameter. The depth testing is performed based on the position information, to obtain depth information of a related primitive. The pixel rendering program executes a discard instruction based on the depth information and the first rendering parameter, to cull an invisible pixel portion, and performs shading processing on a remaining pixel portion after culling based on the second rendering parameter, to generate the first image. The running program shown in FIG. 13A is clipped, to obtain a clipped program required in a first rendering processing stage. FIG. 13B is a diagram of a running program included in the clipped program. A visibility-related running program portion in the primitive processing program is a running program portion that generates the position information and the first rendering parameter. Therefore, the primitive processing program in FIG. 13A may be clipped, and only a running program related to generation processing of the position information and the first rendering parameter is retained. In the pixel rendering program, a visibility-related running program portion is an execution portion of the discard instruction. Therefore, the pixel rendering program in FIG. 13A may be clipped, and the running program portion related to execution of the discard instruction is retained. Based on the foregoing clipping operation, the clipped program described in FIG. 13B, that is, a running program related to the first rendering processing, may be obtained, thereby simplifying a processing process.

In some examples, the running program in FIG. 13A may serve as a running program of the second rendering processing, or a running program portion related to the depth testing and the like in FIG. 13A may be clipped and culled, to obtain a running program related to the second rendering processing.

S200: Perform the first rendering processing on the plurality of primitives to obtain visibility information.

In some possible implementations, the first rendering processing includes: determining visibility information of the plurality of primitives based on depth information of the plurality of primitives, and updating the visibility information based on the discard instruction in the rendering task, where the visibility information indicates at least one of the following: at least one visible primitive in the plurality of primitives or a visible pixel of the at least one visible primitive, that is, the primitive visibility information and the pixel visibility information that are described in the related embodiment of FIG. 10.

For example, the first rendering module of the third image processor 10C in FIG. 8, FIG. 9, FIG. 10, and FIG. 11 may perform the first rendering processing based on the clipped program obtained by the third obtaining module 11C. Based on the clipped primitive processing program in FIG. 13B and a depth testing program, the visibility information of the plurality of primitives may be determined based on the depth information of the plurality of primitives. Based on the clipped pixel rendering program in FIG. 13B, the visibility information may be updated based on the discard instruction in the rendering task. For a related principle of the clipped program, refer to related descriptions in the foregoing step S100. Details are not described herein again.

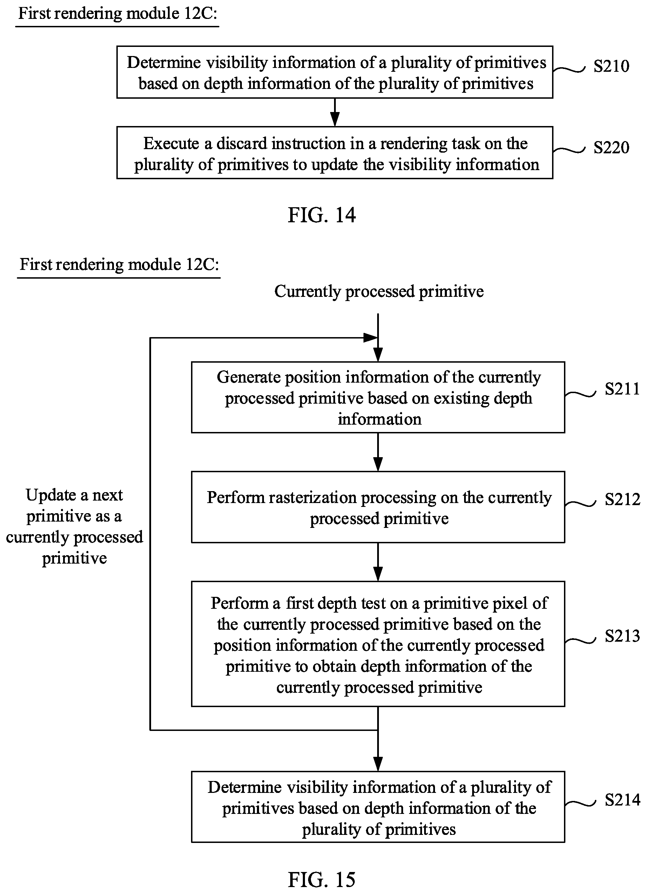

In some possible implementations, step S200 may include the following sub-operations of step S210 and step S220 shown in FIG. 14.

S210: Determine the visibility information of the plurality of primitives based on the depth information of the plurality of primitives.

For example, step S200 may include the following sub-operations of step S211 to step S214 shown in FIG. 15.

First, the following operations in step S211 to step S213 are performed on the plurality of primitives in a pipelined manner to obtain the depth information of the plurality of primitives.

S211: Generate position information of a currently processed primitive based on existing depth information.

For example, the clipped primitive processing program in the clipped program shown in FIG. 13B may be run, and primitive drawing is performed on the currently processed primitive based on the existing depth information, and the corresponding position information is generated. For example, the first rendering parameter may be further generated when the clipped primitive processing program in the clipped program shown in FIG. 13B is run to generate the position information.

S212: Perform rasterization processing on the currently processed primitive.

S213: Perform a first depth test on a primitive pixel of the currently processed primitive based on the position information of the currently processed primitive to obtain depth information of the currently processed primitive. After the depth information of the currently processed primitive is recorded, the process returns to S211 to continue processing a next primitive. For position processing of the next primitive, reference may be made to depth information of a previously existing primitive.

In some possible implementations, as shown in FIG. 9, FIG. 10, and FIG. 11, after the rasterization processing, the first rendering module 12C may perform, based on the position information, the first depth test on the pixel of the currently processed primitive to obtain the depth information of the currently processed primitive. For example, the first rendering module 12C obtains the position information based on the primitive processing program shown in FIG. 13B, and performs the first depth test on pixels of the plurality of primitives, to obtain the depth information of the currently processed primitive. The existing depth information may be updated based on the depth information of the currently processed primitive.

After the operations in step S211 to step S213 are performed on the plurality of primitives in a pipelined manner, the depth information of the plurality of primitives is obtained, and then a sub-operation in step S214 is performed.

S214: Determine the visibility information of the plurality of primitives based on the depth information of the plurality of primitives.

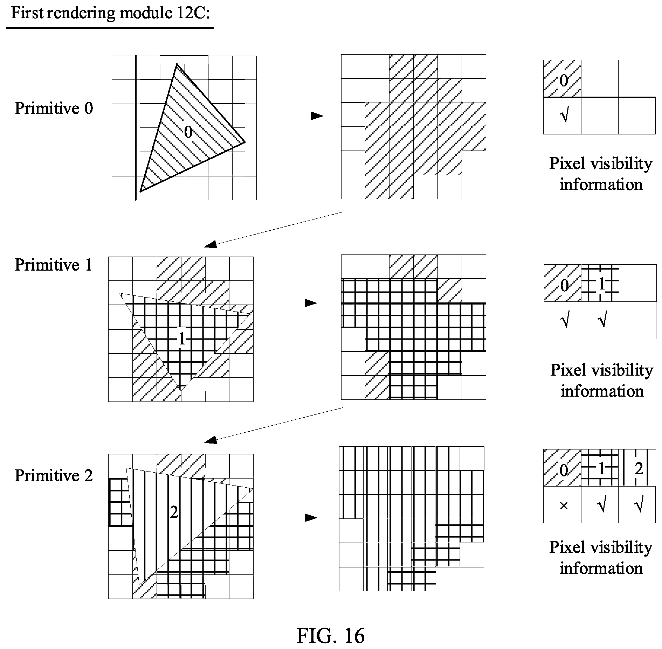

For example, as shown in FIG. 16, drawing a primitive 0, a primitive 1, and a primitive 2 in sequence is used as an example. First, the primitive 0 is drawn based on the operation in step S211 to obtain position information of the primitive 0. The primitive 0 is a first drawn primitive. Therefore, current depth information does not include depth information of a previously processed primitive. After rasterization processing in step S212 is performed on the primitive 0, the operation in step S213 is performed based on the position information of the primitive 0 to obtain depth information of the primitive 0. It is determined, based on the operation in step S213, that all pixels of the primitive 0 are not occluded. Second, based on the operation in step S211, the primitive 1 is drawn to obtain position information of the primitive 1. It is determined, based on the depth information of the previous primitive 0, that the primitive 1 occludes a portion of the pixels of the primitive 0. After rasterization processing in step S212 is performed on the primitive 1, the operation in step S213 is performed based on the position information of the primitive 1 to obtain depth information of the primitive 1, and the existing depth information is updated. The updated depth information indicates that all pixels of the primitive 1 are not occluded, and a portion of the pixels of the primitive 0 are not occluded. Then, the primitive 2 is drawn based on the operation in step S211 to obtain position information of the primitive 2. It is determined, based on the depth information of the previous primitive 0 and the depth information of the previous primitive 1, that the primitive 2 occludes a portion of the pixels of the primitive 1, and also occludes remaining visible pixels of the primitive 0. After rasterization processing in step S212 is performed on the primitive 2, depth information of the primitive 2 is obtained based on the operation in step S213, and the existing depth information is updated. The updated depth information indicates that all pixels of the primitive 2 are not occluded, a portion of the pixels of the primitive 1 are not occluded, and the pixels of the primitive 0 are completely occluded. After the operations in step S211 to step S213 are performed on the plurality of primitives, in the operation in step S214, an occlusion relationship of each primitive pixel may be determined based on the finally obtained depth information of the plurality of primitives, so that invisible pixels and visible pixels in the plurality of primitives are determined based on the occlusion relationship. Therefore, pixel visibility information of the plurality of primitives may be obtained.

S220: Execute the discard instruction in the rendering task on the plurality of primitives to update the visibility information.

For example, the third image processor 10C shown in FIG. 8, FIG. 9, FIG. 10, and FIG. 11 may execute, based on the first rendering module 12C, the discard instruction in the rendering task, to update the visibility information. In some examples, the rendering task may be generated by the processor 30 in the embodiment shown in FIG. 3. For example, applications are run in the processor 30, and different applications may invoke different task interfaces in the processor 30, to generate corresponding rendering tasks.

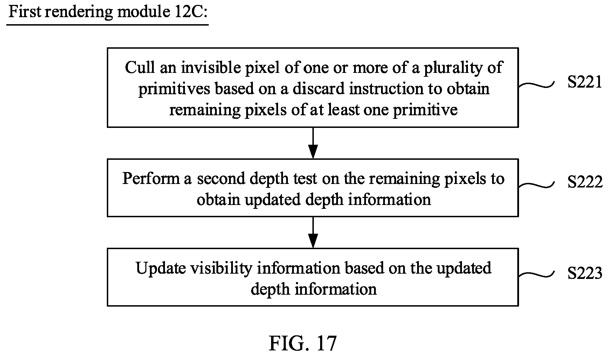

For example, step S220 may include the following sub-operations in step S221 to step S223 shown in FIG. 17.

S221: Cull an invisible pixel of one or more of the plurality of primitives based on the discard instruction to obtain remaining pixels of at least one primitive.

For example, after the clipped primitive processing program shown in FIG. 13B, the depth testing, and the rasterization processing are performed in step S210, the clipped pixel rendering program in the running program shown in FIG. 13B may be executed in step S221, which is specifically as follows: executing the discard instruction in the clipped pixel rendering program. In some examples, the discard instruction may be executed based on the depth information obtained in step S210 and the first rendering parameter. During execution of the discard instruction, a pixel that does not need shading processing is culled based on whether a primitive needs shading processing or the like. Because the visibility information in step S210 considers only an occlusion relationship as a factor that affects the visibility, and an occluded primitive pixel may still need to be shaded (for example, the pixel portion is occluded by a transparent pixel or a translucent pixel of another primitive), visibility of the occluded pixel may be ignored in the visibility information obtained in step S210. In this case, in step S220, an invisible pixel may be re-determined based on the discard instruction from the application, for example, the application run by the processor 30, and the invisible pixel of the one or more of the plurality of primitives is culled to obtain the remaining pixels of the at least one primitive.

S222: Perform a second depth test on the remaining pixels to obtain updated depth information.

For example, in the third image processor 10C shown in FIG. 9, FIG. 10, and FIG. 11, the first rendering module 12C may perform the second depth test on the remaining pixels after culling after the discard instruction in the shading processing stage corresponding to the pixel rendering program is executed. The updated depth information may be obtained through the second depth test. The updated depth information includes related information of a pixel portion that is of a primitive and that is occluded but needs to be shaded for display.

S223: Update the visibility information based on the updated depth information.

For example, in the third image processor 10C shown in FIG. 9, FIG. 10, and FIG. 11, the first rendering module 12C may update, based on the updated depth information, the pixel visibility information obtained in step S210. The updated pixel visibility information includes pixel-level visibility information in a full image rendering processing process.

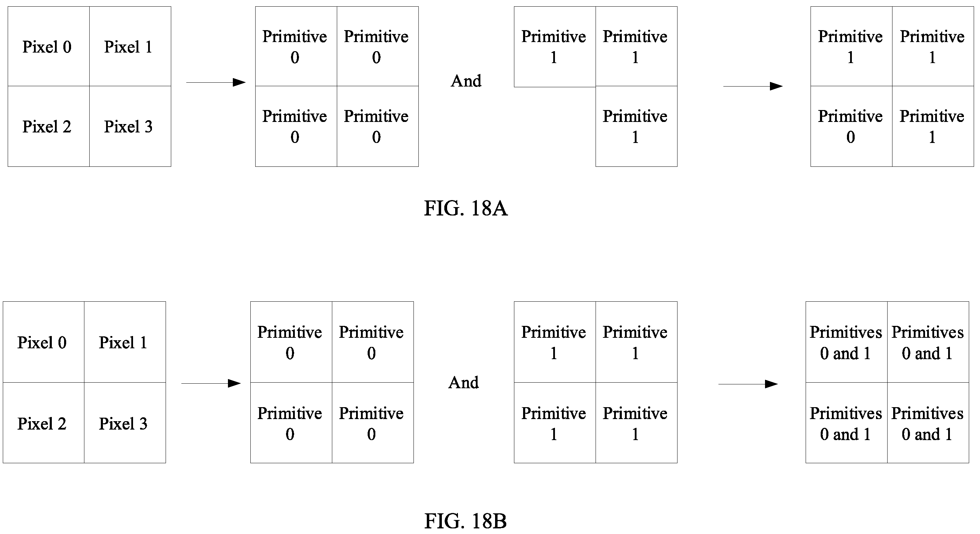

For example, as shown in FIG. 18A, on a same 2x2 pixel block (including a pixel 0, a pixel 1, a pixel 2, and a pixel 3), a primitive 0 is first drawn, and then a primitive 1 is drawn on top of the primitive 0, where the primitive 1 is non-transparent. During the first depth test in step S210, in the visibility information, the pixel 2 of the primitive 0 is recorded as a visible pixel, the pixel 0, the pixel 1, and the pixel 3 of the primitive 0 are recorded as invisible pixels, and the pixel 0, the pixel 1, and the pixel 3 of the primitive 1 are recorded as visible pixels. When the discard instruction is executed in the first rendering processing, because the primitive 1 is non-transparent, it is determined that shading processing needs to be performed on the occluded pixel of the primitive 0 at the pixel 2 on the final pixel block. During the second depth test in step S220, it is determined that the pixel 2 of the primitive 0 is recorded as a visible pixel, and the pixel 0, the pixel 1, and the pixel 3 of the primitive 1 are recorded as visible pixels. As shown in FIG. 18B, a primitive 0 is opaque, and a primitive 1 is translucent. When the primitive 1 occludes the primitive 0, shading effects of both the primitive 0 and the primitive 1 need to be displayed on the pixel block. In step S210 of the first rendering processing, the visibility information obtained based on the occlusion relationship determined by the first depth test records that a pixel of the primitive 0 is an invisible pixel and a pixel of the primitive 1 is a visible pixel. During the second depth test in step S220 of the first rendering processing, the visibility information may be updated based on the discard instruction, and both the pixel of the primitive 0 and the pixel of the primitive 1 are recorded as visible pixels.

For example, the pixel visibility information includes record information about whether each pixel of each primitive of the first image is visible. Therefore, a primitive is a visible primitive provided that the primitive has one visible pixel. The primitive visible information may be obtained based on the pixel visible information. In addition, a visible pixel portion of each visible primitive may also be recorded in the primitive visible information.

S300: Perform the second rendering processing on the at least one visible primitive based on the visibility information to obtain the first image.

In some possible implementations, the second rendering processing includes: obtaining a visible pixel of the at least one visible primitive based on the visibility information; and performing pixel rendering on the visible pixel of the at least one visible primitive.

In some possible implementations, during the second rendering processing, a processing order of the at least one visible primitive is different from an obtaining order of the plurality of primitives. In the embodiment shown in FIG. 4 of this application, an order of primitive drawing depends on an obtaining order of primitives. However, in the embodiment shown in FIG. 5 of this application, a drawing order of the n primitives buffered by the delay buffer 13B may be different from an obtaining order, but a drawing order of primitives beyond the n primitives still needs to depend on the obtaining order. However, in the embodiment shown in FIG. 8 of this application, the extremely accurate visibility information has been obtained in the first rendering processing stage. Therefore, in the second rendering processing stage, rendering processing for the primitives does not need to be performed based on the obtaining order of the plurality of primitives. In actual application, a processing order of visible primitives may be adjusted based on a design requirement.

In some possible implementations, the depth test may not be performed during the second rendering processing. In this embodiment of this application, the extremely accurate visibility information has been obtained in the first rendering processing stage. Therefore, in the second rendering processing stage, pixels that do not need to be processed may be directly culled during rendering processing based on the visibility information, and pixel culling does not necessarily need to be performed in the second rendering processing stage depending on a depth test.

In some possible implementations, during image rendering, there is a principle that only one primitive is drawn for one pixel block. However, in the embodiment shown in FIG. 18A and FIG. 18B, pixel visibility information of a plurality of primitives may exist in one pixel block. When pixel visible information of a plurality of visible primitives corresponding to a same pixel block is stored in a same buffer circuit, a problem of incomplete compatibility may exist. The plurality of pieces of incompatible pixel visibility information may be stored in different buffers in the second buffer circuit of the third image processor 10C.

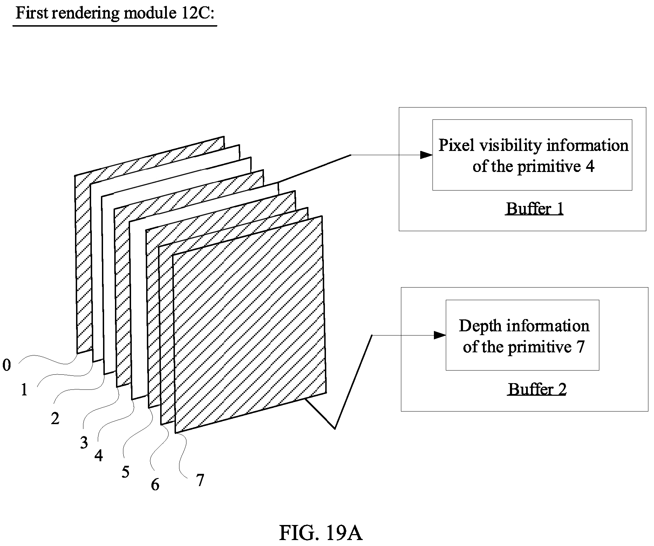

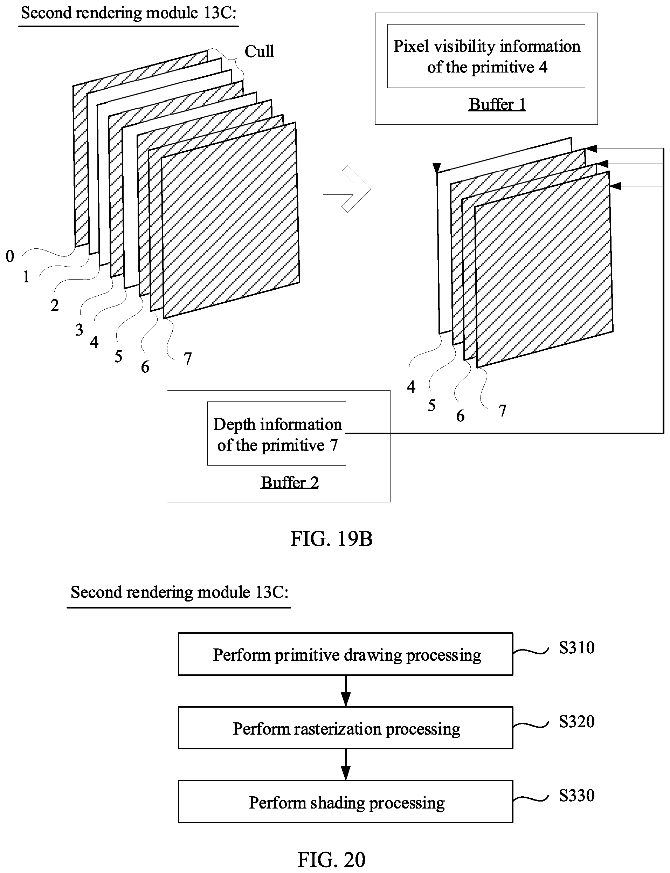

For example, as shown in FIG. 19A and FIG. 19B, rendering processing is performed on eight primitives, namely, a primitive 0 to a primitive 7, in one pixel block. As shown in FIG. 19A, the primitive 0, a primitive 3, a primitive 5, a primitive 6, and the primitive 7 are transparent (or translucent) primitives. A primitive 1, a primitive 2, and a primitive 4 are opaque primitives. When the first rendering module 12C performs the first rendering processing, because the primitive 4 is an opaque primitive and occludes the primitive 0, the primitive 1, the primitive 2, and the primitive 3, pixel visible information of the primitive 4 is stored in a first buffer (buffer 1) in the second buffer circuit. The primitive 5, the primitive 6, and the primitive 7 are primitives incompatible with the primitive 4, so that pixel visible information of the primitive 5, the primitive 6, and the primitive 7 may be stored in a second buffer (buffer 2) of the second buffer circuit. In some examples, a buffer that is of the third image processor 10C and that stores depth information may be reused as the second buffer (buffer 2). For example, the primitive 4 is a topmost primitive among the plurality of opaque primitives. The primitive 7 is a topmost primitive among the plurality of transparent (or translucent) primitives, and the primitive 7 covers the primitive 4. Therefore, only depth information of the primitive 7 may be stored in the second buffer (buffer 2) as a parameter representing the pixel visibility information.

As shown in FIG. 19B, when the second rendering module 13C performs the second rendering processing, corresponding pixel visibility information is read from the first buffer (buffer 1) and the second buffer (buffer 2) respectively. Pixels of the primitive 0, the primitive 1, the primitive 2, and the primitive 3 may be determined as invisible pixels based on the pixel visibility information that is of the primitive 4 and that is obtained from the first buffer (buffer 1). Therefore, the primitive 0, the primitive 1, the primitive 2, and the primitive 3 may be directly culled (culling). Then, pixels of the primitive 5, the primitive 6, and the primitive 7 on the primitive 4 are determined as visible pixels based on the depth information that is of the primitive 7 and that is in the second buffer (buffer 2), and pixel rendering and the like are jointly implemented in the shading processing stage based on the primitive 4, the primitive 5, the primitive 6, and the primitive 7.

In some possible implementations, in step S300, the following sub-operations in step S310 to step S330 shown in FIG. 20 may be performed on the at least one of the plurality of primitives.

S310: Perform primitive drawing processing.

In this embodiment of this application, the primitive visibility information is extremely accurate visibility information. Therefore, processing for invisible primitive pixels can be effectively avoided in a primitive drawing processing stage. For a technical principle of the primitive drawing processing, reference may be made to related descriptions in the foregoing embodiments. Details are not described herein again.

S320: Perform rasterization processing.

S330: Perform shading processing.

In this embodiment of this application, an operation of performing the shading processing based on the pixel rendering program is an operation with highest processing load in the entire image rendering process. In the second rendering processing process, the shading processing is performed only on the visible pixel based on the pixel visibility information, which can greatly reduce execution processing load of the pixel rendering program.

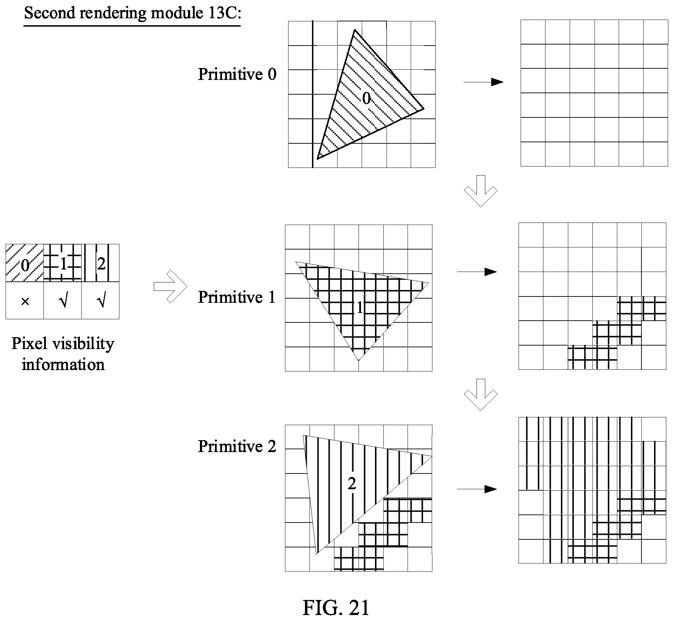

For example, as shown in FIG. 21, in the second rendering processing stage, actual image rendering processing is performed on the plurality of primitives described in FIG. 16 based on the visibility information. First, rendering processing is performed on the primitive 0. It is determined, based on the visibility information, that the primitive 0 has no visible pixel. Therefore, the primitive 0 is not processed in both the primitive drawing processing stage and the shading processing stage. Then, rendering processing is performed on the primitive 1. A portion of pixels of the primitive 1 are determined as visible pixels based on the visibility information. Only the visible pixel portion of the primitive 1 is drawn in the primitive drawing processing stage and the shading processing stage. Finally, rendering processing is performed on the primitive 2. All pixels of the primitive 2 are determined as visible pixels based on the visibility information. All pixels of the primitive 2 are drawn in the primitive drawing processing stage and the shading processing stage. Compared with FIG. 16, it may be learned that, when rendering is performed on the same plurality of primitives, the implementation shown in FIG. 21 can greatly reduce the processing load of image rendering.

In conclusion, in embodiments shown in FIG. 4 and FIG. 5, in the primitive drawing processing stage, depth information needs to be obtained by depending on a drawing order of primitives, making it impossible to effectively obtain visibility information of the primitives. In addition, in the shading processing stage of embodiments shown in FIG. 4 and FIG. 5, only culling of an invisibility pixel related to the depth information is considered, while culling of an invisible pixel related to the first rendering parameter is not. Therefore, embodiments shown in FIG. 4 and FIG. 5 lack confirmation of many pieces of visibility information, making it impossible to either maximize culling of invisible pixels or maximize culling of invisible pixels at different processing stages. However, in embodiments shown in FIG. 8, FIG. 9, FIG. 10, FIG. 11, FIG. 12, FIG. 13A and FIG. 13B, FIG. 14, FIG. 15, FIG. 16, FIG. 17, FIG. 18A and FIG. 18B, FIG. 19A and FIG. 19B, FIG. 20, and FIG. 21 in this application, visibility information related to the depth information obtained after the primitive drawing processing is obtained based on the first rendering processing, and visibility information based on the discard instruction in the shading processing stage is further obtained. In this way, the visibility information related to the depth information is obtained through the first rendering processing, and the visibility information related to the discard instruction in the shading stage is further considered, thereby implementing identification and confirmation of invisible pixel portions in the plurality of primitives of the rendering task. The second rendering processing is performed based on the visibility information obtained through the first rendering processing, so that maximum pixel culling can be implemented in stages such as the primitive drawing processing stage and the shading processing stage of the second rendering processing stage. The first rendering processing includes only a processing program related to execution of the depth test and the discard instruction, and this part of the processing program accounts for only a very small portion of an image rendering program. In addition, although processing of the depth test is performed during the first rendering processing, the processing of the depth test may also be correspondingly reduced during the second rendering processing. Therefore, compared with processing load reduced by the second rendering processing, processing load increased during the first rendering processing may be ignored. Compared with the solutions in FIG. 4 and FIG. 5, the solution based on the third image processor 10C can achieve greater reduction in processing load of image rendering.

An embodiment of this application further provides an image rendering apparatus. The image rendering apparatus includes an image processing circuit and a memory. The image processing circuit is coupled to the memory. The memory stores a rendering task for a first image, and the rendering task includes a discard instruction. The image processing circuit performs, based on the rendering task, the image rendering method (for example, the image rendering method described in FIG. 12, FIG. 14, FIG. 15, FIG. 17, and FIG. 20) according to the foregoing embodiments and any other manners.

For example, the image rendering apparatus may be an image processing chip, the graphics processing circuit is a graphics processing portion of the image processing chip, and the memory is a data storage or buffer portion of the image processing chip.

For example, the image rendering apparatus may include a plurality of chips, the graphics processing circuit is one or more image processing chips in the plurality of chips, and the memory is a memory chip in the plurality of chips.

An embodiment of this application further provides a computer-readable storage medium. The computer-readable storage medium includes instructions. When the instructions are run on an image processor (for example, the third image processor 10C described in FIG. 8, FIG. 9, FIG. 10, and FIG. 11), the image processor is enabled to perform the image rendering method (for example, the image rendering method described in FIG. 12, FIG. 14, FIG. 15, FIG. 17, and FIG. 20) described in the foregoing embodiments and other manners.

An embodiment of this application further provides a computer program product. When the computer program product is run on a computer, the computer is enabled to perform the image rendering method (for example, the image rendering method described in FIG. 12, FIG. 14, FIG. 15, FIG. 17, and FIG. 20) described in the foregoing embodiments and other manners.

The processor in embodiments of this application may be a chip. For example, the processor may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a microcontroller unit (microcontroller unit, MCU), a programmable controller (programmable logic device, PLD), or another integrated chip.

The memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Based on description used as an example instead of a limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories of the systems and methods described in this specification include but are not limited to these and any memory of another proper type.

It should be understood that sequence numbers of the foregoing processes do not mean execution sequences in various embodiments of this application. The execution sequences of the processes should be determined based on functions and internal logic of the processes, but should not be construed as any limitation on the implementation processes of embodiments of this application.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments. Details are not described herein again.

In the several embodiments provided in this application, it should be understood that, the disclosed system, device, and method may be implemented in other manners. For example, the described device embodiment is merely an example. For example, division into the modules is merely logical function division and may be other division in actual implementation. For example, a plurality of modules or components may be combined or integrated into another device, or some features may be ignored or not performed. In addition, the displayed or discussed mutual couplings or direct couplings or communication connections may be implemented through some interfaces. The indirect couplings or communication connections between the devices or modules may be implemented in electronic, mechanical, or other forms.

The modules described as separate parts may or may not be physically separate, and parts displayed as modules may or may not be physical modules, that is, may be located in one device, or may be distributed in a plurality of devices. Some or all the modules may be selected based on an actual requirement to achieve the objectives of the solutions of embodiments.

In addition, functional modules in embodiments of this application may be integrated into one device, or each of the modules may exist alone physically, or two or more modules are integrated into one device.

All or some of the foregoing embodiments may be implemented by using software, hardware, firmware, or any combination thereof. When a software program is used to implement embodiments, embodiments may be implemented completely or partially in a form of computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An image processor, wherein the image processor comprises:
an obtaining module, configured to obtain a plurality of primitives;
a first rendering module, configured to perform first rendering processing on the plurality of primitives, wherein the first rendering processing comprises: determining visibility information of the plurality of primitives based on depth information of the plurality of primitives, and updating the visibility information based on a discard instruction in a rendering task, wherein the visibility information indicates at least one of the following: at least one visible primitive in the plurality of primitives or a visible pixel of the at least one visible primitive; and
a second rendering module, configured to perform second rendering processing on the at least one visible primitive based on the visibility information to obtain a first image.

2. The image processor according to claim 1, wherein the first rendering processing further comprises:
performing a first depth test on pixels of the plurality of primitives to obtain the depth information.

3. The image processor according to claim 2, wherein before performing the first depth test, the first rendering processing further comprises:
performing rasterization processing on the plurality of primitives.

4. The image processor according to any one of claims 1 to 3, wherein updating the visibility information based on the discard instruction in the rendering task comprises:
culling an invisible pixel of one or more of the plurality of primitives based on the discard instruction to obtain remaining pixels of at least one primitive;
performing a second depth test on the remaining pixels to obtain updated depth information; and
updating the visibility information based on the updated depth information.

5. The image processor according to any one of claims 1 to 4, wherein performing the second rendering processing on the at least one visible primitive based on the visibility information comprises:
obtaining the at least one visible primitive from the plurality of primitives based on the visibility information; and
performing the second rendering processing on the at least one visible primitive.

6. The image processor according to any one of claims 1 to 5, wherein the second rendering processing comprises:
obtaining a visible pixel of the at least one visible primitive based on the visibility information; and
performing the shading processing on the visible pixel of the at least one visible primitive.

7. The image processor according to claim 6, wherein before the shading processing, the second rendering processing further comprises: primitive drawing processing and rasterization processing.

8. The image processor according to any one of claims 1 to 7, wherein during the second rendering processing, a processing order of the at least one visible primitive is different from an obtaining order of the plurality of primitives.

9. The image processor according to any one of claims 1 to 8, wherein the image processor further comprises a program generation module;
the program generation module is configured to clip the rendering task to obtain a visibility-related clipped program; and
the first rendering module is further configured to perform the first rendering processing on the plurality of primitives by running the clipped program.

10. The image processor according to any one of claims 1 to 8, wherein
the obtaining module is further configured to obtain a visibility-related clipped program from the rendering task; and
the first rendering module is further configured to perform the first rendering processing on the plurality of primitives by running the clipped program.

11. An image rendering method, wherein the method comprises:
obtaining a plurality of primitives;
performing first rendering processing on the plurality of primitives, wherein the first rendering processing comprises: determining visibility information of the plurality of primitives based on depth information of the plurality of primitives, and updating the visibility information based on a discard instruction in a rendering task, wherein the visibility information indicates at least one of the following: at least one visible primitive in the plurality of primitives or a visible pixel of the at least one visible primitive; and
performing second rendering processing on the at least one visible primitive based on the visibility information to obtain a first image.

12. The image rendering method according to claim 11, wherein the first rendering processing further comprises:
performing a first depth test on pixels of the plurality of primitives to obtain the depth information.

13. The image rendering method according to claim 12, wherein before performing the first depth test, the first rendering processing further comprises:
performing rasterization processing on the plurality of primitives.

14. The image rendering method according to any one of claims 11 to 13, wherein updating the visibility information based on the discard instruction in the rendering task comprises:
culling an invisible pixel of one or more of the plurality of primitives based on the discard instruction to obtain remaining pixels of at least one primitive;
performing a second depth test on the remaining pixels to obtain updated depth information; and
updating the visibility information based on the updated depth information.

15. The image rendering method according to any one of claims 11 to 14, wherein performing the second rendering processing on the at least one visible primitive based on the visibility information comprises:
obtaining the at least one visible primitive from the plurality of primitives based on the visibility information; and
performing the second rendering processing on the at least one visible primitive.

16. The image rendering method according to any one of claims 11 to 15, wherein the second rendering processing comprises:
obtaining a visible pixel of the at least one visible primitive based on the visibility information; and
performing the shading processing on the visible pixel of the at least one visible primitive.

17. The image rendering method according to claim 16, wherein before the shading processing, the second rendering processing further comprises: primitive drawing processing and rasterization processing.

18. The image rendering method according to any one of claims 11 to 17, wherein during the second rendering processing, a processing order of the at least one visible primitive is different from an obtaining order of the plurality of primitives.

19. The image rendering method according to any one of claims 11 to 18, wherein the method further comprises:
clipping the rendering task to obtain a visibility-related clipped program; and
performing the first rendering processing on the plurality of primitives by running the clipped program.

20. The image rendering method according to any one of claims 11 to 18, wherein the method further comprises:
obtaining a visibility-related clipped program from the rendering task; and
performing the first rendering processing on the plurality of primitives by running the clipped program.

21. An image rendering apparatus, wherein the image rendering apparatus comprises an image processing circuit and a memory, the image processing circuit is coupled to the memory, the memory stores a rendering task for a first image, the rendering task comprises a discard instruction, and the image processing circuit is configured to perform the image rendering method according to any one of claims 11 to 20.

22. An electronic device, comprising a circuit board and the image processor according to any one of claims 1 to 10, wherein the image processor is disposed on the circuit board.

23. A computer-readable storage medium, wherein the computer-readable storage medium comprises instructions, and when the instructions are run on an image processor, the image processor is enabled to perform the image rendering method according to any one of claims 11 to 20.
